# EUROPÄISCHE PATENTSCHRIFT

(11) **EP 3 244 237 B1**
(45) Veröffentlichungstag und Bekanntmachung des Hinweises auf die Patenterteilung: **08.11.2023**
(21) Anmeldenummer: 16168964.1
(22) Anmeldetag: 10.05.2016
(51) Int. Cl.: G01V 8/10

(54) **OPTISCHER SENSOR UND VERFAHREN ZUM BETRIEB EINES OPTISCHEN SENSORS**
OPTICAL SENSOR AND METHOD OF OPERATING AN OPTICAL SENSOR
CAPTEUR OPTIQUE ET PROCÉDÉ D'OPÉRATION D'UN CAPTEUR OPTIQUE

(43) Veröffentlichungstag der Anmeldung: 15.11.2017
(73) Patentinhaber: Leuze electronic GmbH + Co KG, 73277 Owen/Teck (DE)
(72) Erfinder: Brunner, Rolf, 82223 Eichenau (DE); Feller, Bernhard, 86316 Friedberg (DE)
(74) Vertreter: Ruckh, Rainer Gerhard

(56) Entgegenhaltungen:
- DE-A1- 4 323 910
- FR-A1- 2 685 092

## Beschreibung

Die Erfindung betrifft einen optischen Sensor sowie ein Verfahren zum Betrieb eines optischen Sensors.

Derartige optische Sensoren können insbesondere als Lichtschranken oder auch als Lichtschrankenanordnungen, insbesondere Lichtvorhänge ausgebildet sein.

Generell weisen diese optischen Sensoren wenigstens einen Sender und wenigstens einen Empfänger, der diesem Sender zugeordnet ist, auf. Dabei werden der Sender und Empfänger in vorgegebenen Zyklen immer zeitglich aktiviert.

Zur Erfassung von Objekten in einem Überwachungsbereich wird in einer Datenauswerteeinheit anhand einer Auswertung der Empfangssignale des Empfängers geprüft, ob eine vom Sender emittierte Folge von Lichtpulsen empfangen wird. Ist dies der Fall, liegt ein freier Überwachungsbereich vor. Andernfalls liegt ein Objekteingriff vor. Abhängig von dieser Auswertung wird in der Datenauswerteeinheit ein binäres Schaltsignal generiert, dessen Schaltzustände angeben, ob sich ein Objekt im Überwachungsbereich befindet oder nicht.

Bei bekannten optischen Sensoren erfolgt zusätzlich zur Objekterfassung eine Fremdlichterfassung. Dies wird insbesondere bei der Inbetriebnahme des optischen Sensors genutzt, um bei einer solchen Fremdlichteinstrahlung geeignete Gegenmaßnahmen vorzusehen.

Nachteilig hierbei ist jedoch, dass eine solche Fremdlichteinstrahlung immer nur dann erfasst werden kann, wenn sie in Sendepausen des Senders auftritt, das heißt wenn dieser selbst keine Lichtpulse auf den Empfänger einstrahlt.

Treten jedoch Fremdlichteinstrahlungen auf, die zufällig exakt oder näherungsweise synchron zu dem Sendebetrieb des Senders sind, so können diese während der Inbetriebnahme des optischen Sensors nicht erkannt werden und führen dann im nachfolgenden Arbeitsbetrieb des optischen Sensors zu Fehlfunktionen.

Die DE 42 24 784 C2 betrifft ein Verfahren zum Betrieb von Lichtschranken, Lichtgittern oder Lichtvorhängen, bei dem ein Sender innerhalb eines vorgegebenen ersten Zeitfensters mindestens zwei zeitlich in einem zweiten und mindestens einem dritten Zeitfenster liegende Impulsgruppen codierten Lichtes zu einem zugeordneten Empfänger abstrahlt. Das zweite und das mindestens dritte Zeitfenster haben einen Abstand voneinander und liegen unsymmetrisch innerhalb des ersten Zeitfensters. Der Empfänger prüft nur während des zweiten und des mindestens dritten Zeitfensters, ob innerhalb dieser Zeitfenster empfangene Impulsgruppen einen gültigen Code aufweisen. Der Empfänger erzeugt dann ein Signal für einen störungsfreien Betrieb, wenn bereits eine empfangene Impulsgruppe als gültig erkannt wurde.

Bei diesem Verfahren wird davon ausgegangen, dass die auftretende Fremdlichteinstrahlung so niederfrequent ist, dass immer eine Impulsgruppe störungsfrei empfangen werden kann. Damit lassen sich jedoch Fremdlichteinflüsse nur unzureichend beseitigen.

Die FR 2 6 85 092 A1 betrifft ein Verfahren zum Betrieb einer optischen Sensoranordnung zur Feststellung von in einem Überwachungsbereich vorhandenen Gegenständen mit einem nacheinander einen zeitlichen Abstand aufweisende Lichtsignale in den Überwachungsbereich aussendenden Lichtsender und einem Lichtempfänger, welcher an eine Empfangssignalverarbeitungsstufe angeschlossen ist, die in Abhängigkeit vom Vorhandensein eines Gegenstandes im Überwachungsbereich ein Gegenstands-Feststellungssignal abgibt. Jedes einzelne gesendete Lichtsignal besteht von Impulsen, die mit einer bestimmten Impulsfolgefrequenz aufeinanderfolgen. Die empfangenen Lichtsignale durchlaufen in der Empfangssignalverarbeitungsstufe eine Filteranordnung, die für Spektralanteile der Impulsfolgen durchlässig ist.

Der Erfindung liegt die Aufgabe zugrunde, einen optischen Sensor und ein Verfahren mit verbesserter Fremdlichterkennung bereitzustellen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft einen optischen Sensor mit wenigstens einem Sender, wenigstens einem Empfänger und einer Datenauswerteeinheit. In der Datenauswerteeinheit wird anhand von am Ausgang des Empfängers anstehenden Empfangssignalen geprüft, ob eine eine Codierung bildende Folge von vom Sender emittierten Lichtpulsen im Empfänger registriert wird. Abhängig hiervon wird ein binäres Schaltsignal generiert. Eine Synchronisationseinheit ist vorgesehen, mittels derer der wenigstens ein Sender und der wenigstens eine Empfänger zeitlich synchron innerhalb vorgegebener Zyklen aktiviert sind, wobei innerhalb eines Zyklus der oder ein Sender eine Folge von Lichtimpulsen emittiert. Die vom Sender emittierten Lichtpulse sind in verschiedenen Zyklen zueinander invertiert und/oder zeitlich verschoben. Eine Fremdlichtauswerteeinheit ist vorgesehen, welche zur Erfassung von Fremdlicht innerhalb eines Zyklus nur in den Zeitintervallen, in welchen vom Sender keine Lichtpulse emittiert werden, die Empfangssignale des Empfängers auswertet.

Weiterhin betrifft die Erfindung ein entsprechendes Verfahren.

Der Grundgedanke der Erfindung besteht somit darin, dass der Sender des optischen Sensors in den Zyklen, das heißt Zeitintervallen, in denen er aktiviert ist, die Lichtpulse nicht immer gleich aussendet. Vielmehr sind die Lichtpulse in einem Zyklus zu den Lichtpulsen in einem vorangehenden Zyklus invertiert und/oder zeitversetzt.

Während der einzelnen Zyklen wird einerseits mit der Datenauswerteeinheit eine Auswertung der Empfangssignale zur Generierung des binären Schaltsignals zur Generierung des binären Schaltsignals vorgenommen. Parallel hierzu erfolgt in der Fremdlichtauswerteeinheit eine Fremdlichterkennung indem die Empfangssignale des Empfängers immer nur in den Sendepausen des Senders ausgewertet werden.

Da erfindungsgemäß die Sendezeitpunkte der Lichtpulse innerhalb der Zyklen durch Investieren und/oder zeitliches Versetzen variiert werden, kann in kurzer Zeit mit der Fremdlichtauswerteeinheit das gesamte Zeitintervall des Zyklus des Senders auf das Vorhandensein von Fremdlicht abgeprüft werden.

Für den Fall, dass in der Fremdlichtauswerteeinheit eine Fremdlichteinstrahlung erkannt wird, wird dort vorteilhaft eine Fehlermeldung generiert, die es dem Benutzer erlaubt, Gegenmaßnahmen gegen die Fremdlichteinstrahlung zu treffen, bevor es zu Fehlfunktionen des optischen Sensors kommt. Vorteilhaft kann die Fremdlichterkennung während der Inbetriebnahme des optischen Sensors erfolgen, so dass bei einem Erkennen von Fremdlichteinstrahlung Gegenmaßnahmen derart getroffen werden können, damit ein fehlerfreier Arbeitsbetrieb des optischen Sensors gewährleistet ist.

Das erfindungsgemäße Verfahren kann für unterschiedliche optische Sensoren eingesetzt werden, wobei der optische Sensor als Sicherheitssensor ausgebildet sein kann, der in sicherheitstechnischen Applikationen eingesetzt wird. Dabei kann der optische Sensor nur einen Sender und nur einen Empfänger aufweisen und als Lichtschranke, Reflexionslichtschranke oder Lichttaster ausgebildet sein.

Weiterhin kann der optische Sensor auch Mehrfachanordnungen von Sendern und Empfängern aufweisen.

Besonders vorteilhaft ist dabei der optische Sensor ein Lichtvorhang, welcher mehrere Strahlachsen bildende Paare von Sendern und Empfängern aufweist. Die Paare sind von Sendern und Empfängern mittels der Synchronisationseinheit zyklisch einzeln nacheinander aktiviert.

Dabei können die Sender und Empfänger in unterschiedlichen Gehäusen an gegenüberliegenden Rändern eines Überwachungsbereichs angeordnet sein. Die Sender und Empfänger sind in einem Gehäuse integriert, wobei in Abstand zu diesem eine Reflektoreinheit vorgesehen ist.

Generell ist mit der Synchronisationseinheit der Betrieb der Sender und Empfänger derart synchronisiert, dass jeweils in einem Zyklus nur ein Sender und ein Empfänger einer Strahlachse aktiviert sind.

Gemäß einer ersten Variante ist mit der Synchronisationseinheit eine drahtgebundene Synchronisierung durchführbar, wobei die Synchronisationseinheit über Leitungen an Steuermittel für den oder die Sender und den oder die Empfänger angeschlossen ist.

Gemäß einer zweiten Variante erfolgt mit der Synchronisationseinheit eine optische Synchronisierung, wobei für die optische Synchronisierung die von den Lichtpulsen des oder eines Senders gebildete Codierung dient.

Bei einem optischen Sensor wie einem Lichtvorhang, der mehrere Sender und Empfänger aufweist, muss die zur Synchronisation verwendete Strahlachse eine Codierung aufweisen, die sich von den Codierungen aller anderen Strahlachsen unterscheidet.

Besonders vorteilhaft bilden bei der Ausbildung des optischen Sensors als Lichtvorhang die Lichtpulse der einzelnen Strahlachsen unterschiedliche Codierungen aus, so dass eine beliebige Strahlachse zur Synchronisierung verwendbar ist.

Da in diesem Fall die Codierungen aller Strahlachsen unterschiedlich sind, kann nun eine beliebige Strahlachse für die Synchronisierung verwendet werden.

Dies ist insbesondere für im Bereich der Sicherheitstechnik eingesetzte Lichtvorhänge vorteilhaft, bei denen als Zusatzfunktion ein Muting oder Blanking realisiert ist. Bei derartigen Anwendungen können einzelne Strahlachsen dauerhaft durch Objekteingriffe blockiert sein und können damit nicht mehr zur Synchronisierung verwendet werden, da die Codierung bildenden Lichtpulse des Senders dieser Strahlachse nicht mehr zum zugeordneten Empfänger gelangen. Da nun jedoch beliebige Strahlachsen zur Synchronisierung des Lichtvorhangs verwendet werden können, kann der Betrieb des Lichtvorhangs auch in derartigen Applikationen störungsfrei aufrechterhalten werden.

Um die Sendezeitpunkte der Lichtpulse innerhalb eines Zyklus, in der ein Sender aktiviert ist, fortlaufend zu ändern, werden die Lichtpulse in vorgegebenen Folgen unverändert und dann innerhalb des Zyklus invertiert und/oder zeitverschoben. Dadurch kann mit der Fremdlichtauswerteeinheit Fremdlicht innerhalb des gesamten Zyklus festgestellt werden und insbesondere auch Störeinstrahlungen erfasst werden, die zufällig dem Sendetakt des Senders entsprechen.

Gemäß einer ersten Variante sind in aufeinanderfolgenden Zyklen, in denen der oder ein Sender aktiviert ist, die Lichtpulse des Senders zueinander invertiert und/oder zeitlich verschoben.

In diesem Fall erfolgt die Änderung der Sendezeitpunkte der Lichtpulse für die Zyklen des jeweiligen Senders mit der maximalen Änderungsfrequenz, da Sendezeitpunkte in jedem Zyklus geändert werden. Damit können Fremdlichteinstrahlungen beliebiger Frequenz sehr schnell erkannt werden.

Gemäß einer zweiten Variante folgt nach einer fest vorgegebenen, zeitlich variierenden oder zufälligen Anzahl von Zyklen, in denen der oder ein Sender aktiviert ist ein Zyklus, in welchem die Lichtpulse dieses Senders invertiert und/oder zeitlich verschoben sind.

Hier kann insbesondere die Änderungsrate, mit der die Sendezeitpunkte der Lichtpulse innerhalb der Zyklen geändert werden, applikationsspezifisch vorgegeben werden, wobei insbesondere eine Anpassung an bestimmte Fremdlichtquellen, die Störeinstrahlungen mit bekannten Frequenzen generieren, möglich ist.

Besonders vorteilhaft ist der Betrag einer zeitlichen Verschiebung von Lichtpulsen innerhalb eines Zyklus konstant oder zeitlich variierbar.

Dadurch wird die Variabilität bei dem Ändern der Sendezeitpunkte innerhalb eines Zyklus noch weiter erhöht.

Gemäß einer besonders vorteilhaften Ausführungsform erfolgt in der Datenauswerteeinheit eine Auswertung von Empfangssignalen über mehrere Zyklen, um das Schaltsignal zu generieren.

Durch die Auswertung über mehrere Zyklen wird die Zuverlässigkeit des so generierten Schaltsignals erheblich erhöht. Insbesondere kann auf diese Weise die Auswertung auch bei vorhandener Störeinstrahlung erfolgen. So kann in der Datenauswerteeinheit für eine Generierung eines Schaltsignals gefordert werden, dass bei Heranziehung von N Zyklen zur Generierung des Schaltsignals nur eine vorgegebene Teilmenge von M (< N) Zyklen störungsbehaftete Signale geliefert werden dürfen, was mit der Fremdlichtauswerteeinheit festgestellt werden kann.

Zweckmäßig werden in der Datenauswerteeinheit die Empfangssignale des oder der Empfänger mit einem ersten Schwellwert bewertet. In der Fremdlichtauswerteeinheit werden die Empfangssignale des oder der Empfänger mit einem zweiten Schwellwert bewertet.

Dabei können die beiden Schwellwerte insbesondere unterschiedlich ausgebildet sein, so dass der erste Schwellwert an den Nutzlichtpegel und der zweite Schwellwert an die Fremdlichtpegel angepasst werden kann.

Bei nach dem Lichtschrankenprinzip arbeitenden optischen Sensor wird dabei ein freier Überwachungsbereich generell dadurch erkannt, dass in dem jeweiligen Empfänger die vom zugeordneten Sender emittierte Folge von Lichtpulsen erkannt wird. Entsprechend liegt ein Objekteingriff im Überwachungsbereich dann vor, wenn im jeweiligen Empfänger die Lichtpulse des zugeordneten Senders nicht mehr empfangen werden.

Vorteilhaft werden in der Fremdlichtauswerteeinheit aktuelle Empfangssignale mit einem zuvor bestimmten Mittelwert von Empfangssignalen vorglichen. Mit dieser Methode kann eine Differenzierung von empfangenem Fremdlicht derart erfolgen, dass ein zum Beispiel durch Sonnenlicht verursachtes Rauschen am Empfänger von einzelnen, sporadisch auftretenden Störungssignalen unterschieden werden kann.

Gemäß einer vorteilhaften Ausgestaltung weist die Fremdlichtauswerteeinheit eine Zählvorrichtung auf, mittels derer Ergebnisse von Fremdlichteinstrahlungen gezählt werden.

Damit kann die Häufigkeit von Fremdlichteinstrahlung erfasst werden, wodurch eine Klassifizierung des Fremdlichts möglich ist. Diese Klassifizierung kann in der in der Fremdlichtauswerteeinheit generierten Fehlermeldung zum Ausdruck kommen.

Die Erfindung wird im Folgenden anhand der Zeichnungen erläutert. Es zeigen:
- Figur 1:: Erstes Ausführungsbeispiel des erfindungsgemäßen optischen Sensors in Form einer Einweg-Lichtschranke.
- Figur 2:: Zeitdiagramm für eine erste Variante des Betriebs des optischen Sensors gemäß Figur 1.
- Figur 3a-d:: Zeitdiagramm für eine zweite Variante des Betriebs des optischen Sensors gemäß Figur 1.
- Figur 4:: Zweites Ausführungsbeispiel des erfindungsgemäßen optischen Sensors in Form eines Lichtvorhangs.
- Figur 5:: Zeitdiagramm für den Betrieb des optischen Sensors gemäß Figur 4.

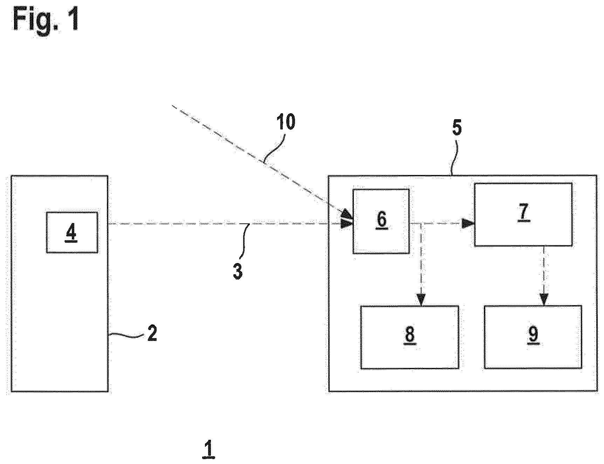

Figur 1 zeigt ein Ausführungsbeispiel des optischen Sensors 1 in Form einer Einweglichtschranke. Dieser optische Sensor 1 weist in einem ersten Gehäuse 2 einen Lichtstrahlen 3 emittierenden Sender 4 auf, deren Betrieb von nicht dargestellten Steuermitteln gesteuert ist. Der Sender 4 ist von einer Leuchtdiode oder Laserdiode gebildet. Weiterhin weist der optische Sensor 1 ein zweites Gehäuse 5 auf, in dem ein Empfänger 6 mit zugeordneten Steuermitteln und Auswertemitteln integriert ist. Für den Fall, dass der optische Sensor 1 als Sicherheitssensor für den Einsatz in sicherheitstechnischen Applikationen ausgebildet ist, weisen die Steuermittel und Auswertemittel einen fehlersicheren, insbesondere redundanten Aufbau auf.

Der Empfänger 6 ist von einer Photodiode oder dergleichen gebildet. Die dem Empfänger 6 zugeordneten Steuermittel und Auswertemittel sind von einer Synchronisationseinheit 7, einer Datenauswerteeinheit 8 und einer Fremdlichtauswerteeinheit 9 gebildet. Diese Einheiten können als separate Hardwareeinheiten oder als unterschiedliche Softwaremodule einer Rechnereinheit ausgebildet sein.

Das Gehäuse 2 mit dem Sender 4 und das Gehäuse 5 mit dem Empfänger 6 sind auf gegenüberliegenden Seiten eines Überwachungsbereichs angeordnet.

Der Sender 4 emittiert pulsförmige Lichtstrahlen 3. Dabei emittiert der Sender 4 in Zyklen, das heißt Zeitintervallen vorgegebener Länge, die durch längere Sendepausen getrennt sind, Folgen von Lichtpulsen, die bei freiem Überwachungsbereich auf den Empfänger 6 treffen.

Mittels der Synchronisationseinheit 7 erfolgt eine optische Synchronisation des Empfängers 6 auf den Sender 4. Die vom Sender 4 emittierten Lichtpulse sind als Erwartungshaltung an die eine Codierung bildenden Lichtpulse des Senders 4 in der Synchronisationseinheit 7 vorbekannt. Durch die Erfassung der Lichtpulse des Senders 4 in der Synchronisationseinheit 7 wird der Betrieb des Empfängers 6 so synchronisiert, dass der Sender 4 und der Empfänger 6 immer zeitgleich aktiviert sind, nämlich innerhalb der Zyklen, in denen der Sender 4 Lichtpulse emittiert.

In der Datenauswerteeinheit 8 wird in Abhängigkeit der am Empfänger 6 registrierten Empfangssignale ein binäres Schaltsignal generiert, dass über einen nicht dargestellten Schaltausgang ausgegeben wird. Wird im Empfänger 6 die vom Sender 4 emittierte Codierung in Form der ausgesendeten Lichtpulse empfangen, liegt ein freier Überwachungsbereich vor und das Schaltsignal nimmt einen entsprechenden Schaltzustand "freier Überwachungsbereich" an. Wird dagegen im Empfänger 6 die Codierung des Senders 4 nicht erkannt, liegt ein Objekteingriff im Überwachungsbereich vor. Dann nimmt das Schaltsignal einen entsprechenden Schaltzustand entsprechend einer Objektmeldung ein.

Zur Generierung des Schaltsignals erfolgt zweckmäßigerweise eine Bewertung der Empfangssignale mit einem Schwellwert. Weiterhin können auch die über mehrere Zyklen erfassten Empfangssignale zur Generierung des Schaltsignals herangezogen werden.

Mit der Fremdlichtauswerteeinheit 9 erfolgt die Erfassung von Fremdlicht, das als Störsignal von externen Lichtquellen in den Empfängern 6 eingestrahlt werden kann. Derartige Fremdlichtstrahlen 10 sind in Figur 1 dargestellt.

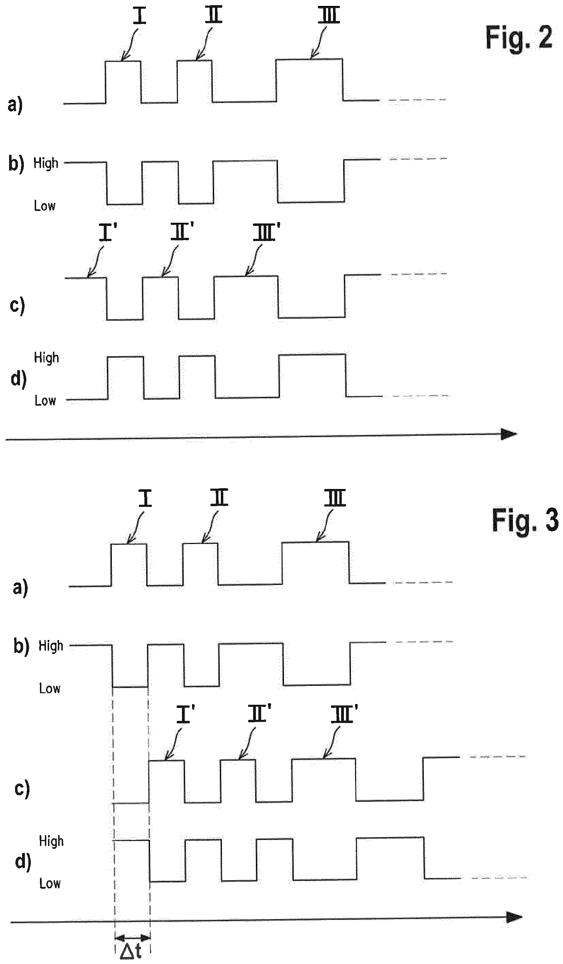

Zur Erfassung von derartigem Fremdlicht während der gesamten Zykluszeit, in der der Sender 4 Lichtpulse emittiert, wird der optische Sensor 1 gemäß Figur 1 gemäß den in den Figuren 2a-d dargestellten Verfahren betrieben.

Figur 2a zeigt einen ersten Zyklus, in dem der Sender 4 drei Lichtpulse I, II, III emittiert, welchen jeweils eine Sendepause vorangeht.

Figur 2c zeigt einen zweiten Zyklus. Dort sind die ausgesendeten Lichtpulse I`, II', III' invertiert zu den Lichtpulsen I, II, III des ersten Zyklus, das heißt die Lichtpulse des zweiten Zyklus entsprechen den Sendepausen des ersten Zyklus.

Der Wechsel zwischen einem Sendebetrieb mit dem ersten Zyklus gemäß Figur 2a und einem Sendebetrieb mit dem zweiten Zyklus gemäß Figur 2c kann alternierend erfolgen, so dass für jeden Zyklus der Sendebetrieb gewechselt wird. Alternativ kann erst nach einer vorgegebenen oder zufälligen Anzahl von Zyklen der Sendebetrieb gewechselt werden. Vorteilhaft wir dieser Sendebetrieb über die Steuermittel im Sender vorgegeben.

Die Figur 2b zeigt ein Freigabesignal das bei dem Sendebetrieb gemäß Figur 2a in der Synchronisationseinheit 7 generiert und in die Fremdlichtauswerteeinheit 9 eingegeben wird. Die Figur 2d zeigt ein Freigabesignal, das bei dem Sendebetrieb gemäß Figur 2c in der Synchronisationseinheit 7 generiert wird und in die Fremdlichtauswerteeinheit 9 eingelesen wird.

Mit den Freigabesignalen wird die Fremdlichterfassung in der Fremdlichtauswerteeinheit 9 gesteuert. Da dann, wenn der Sender 4 gerade einen Lichtpuls emittiert, nicht noch zusätzlich Fremdlicht erkannt werden kann, erfolgt die Steuerung der Fremdlichtauswerteeinheit 9 mit den Freigabesignalen derart, dass in der Fremdlichtauswerteeinheit 9 eine Fremdlichtauswertung nur dann erfolgt, wenn das jeweilige Freigabesignal den Signalwert "high" aufweist, was nur in den Sendepausen des Senders 4 der Fall ist.

Da der Sendebetrieb zwischen nicht invertiertem Betrieb (Figur 2a) und invertiertem Betrieb (Figur 2c) wechselt, kann über den gesamten Zyklus zuverlässig Fremdlicht erkannt werden.

Die Fremdlichterkennung erfolgt zweckmäßig durch eine Bewertung der Empfangssignale mit einem Schwellwert, der sich vorzugsweise von dem Schwellwert der Datenauswerteeinheit 8 zur Generierung des Schaltsignals unterscheidet.

Weiterhin kann das registrierte Fremdlicht in der Fremdlichtauswerteeinheit 9 über einen vorgegebenen Zeitraum gemittelt werden, wobei nachfolgend aktuelle Fremdlichteinstrahlungen mit dem Mittelwert verglichen werden. Damit können konstante Fremdlichtquellen (wie zum Beispiel Sonnenlicht) von sich rasch ändernden Störsignalspitzen unterschieden werden. Schließlich können in der Fremdlichtauswerteeinheit 9 mittels einer Zählvorrichtung Fremdlichtergebnisse gezählt werden.

Generell wird in Abhängigkeit der Fremdlichterkennung in der Fremdlichtauswerteeinheit 9 eine Fehlermeldung generiert, insbesondere wenn das Fremdlicht einen kritischen Wert erreicht. Diese Fehlermeldung kann über einen Signalgeber des optischen Sensors 1 angezeigt werden. Alternativ oder zusätzlich wird das erfasste Fremdlicht beziehungsweise die Fehlermeldung in der Datenauswerteeinheit 8 bei der Generierung des Schaltsignals berücksichtigt. Beispielsweise können zur Generierung des Schaltsignals die Ergebnisse der Empfangssignalauswertung über eine Anzahl N von Zyklen herangezogen werden, wobei eine Objektmeldung nur dann generiert wird, wenn wenigstens für eine vorgegebene Anzahl M (< N) Zyklen kein Fremdlicht registriert wird.

Die Figuren 3a bis 3d zeigen eine Variante des Verfahrens gemäß den Figuren 2a bis 2d. Bei der Ausführung gemäß Figur 3 sind die Lichtpulse I', II', III` gemäß Figur 3c gemäß den ursprünglichen Lichtpulsen I, II, III nicht invertiert, sondern um ein Zeitintervall Δt verschoben.

Die Zeitverschiebung Δt kann konstant sein oder für verschiedene Zyklen unterschiedlich gewählt sein.

Ansonsten erfolgt die Auswertung in der Fremdlichtauswerteeinheit 9 anhand der Freigabesignale gemäß den Figuren 3b, 3d analog zu der Ausführungsform gemäß Figur 2.

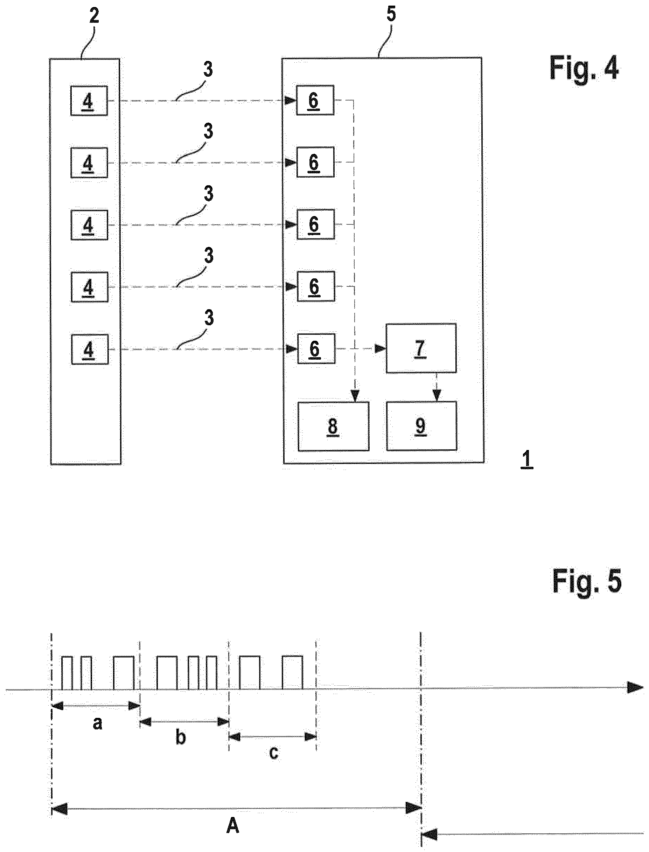

Figur 4 zeigt ein Ausführungsbeispiel des optischen Sensors 1 in Form eines Lichtvorhangs. Der Lichtvorhang umfasst mehrere Lichtstrahlen 3 emittierende Sender 4 in einem ersten Gehäuse 2 an einem ersten Rand des Überwachungsbereichs und mehrere Lichtstrahlen 3 empfangende Empfänger 6 in einem zweiten Gehäuse 5 an einem zweiten Rand des Überwachungsbereichs.

Die Sender 4 werden von einem nicht dargestellten Steuermittel gesteuert. Die Empfänger 6 sind an Steuer- und Auswertemittel angeschlossen, die der Ausführungsform der Figur 1 entsprechen, das heißt sie umfassen eine Synchronisationseinheit 7, eine Datenauswerteeinheit 8 und eine Fremdlichtauswerteeinheit 9. Ebenso wie mit dem optischen Sensor 1 gemäß Figur 1 kann auch der optische Sensor 1 gemäß Figur 4 als Sicherheitssensor ausgebildet sein.

Jedem Sensor ist zur Bildung einer Strahlachse ein Empfänger 6 zugeordnet, so dass bei freiem Überwachungsbereich, wie in Figur 4 dargestellt, die Lichtstrahlen 3 des Senders 4 nur auf den zugeordneten Empfänger 6 treffen.

Durch die Steuermittel werden die Sender 4 einzeln nacheinander zyklisch aktiviert. Dabei senden die Sender 4 jeweils in einem Zyklus Codierungen bildende Lichtpulse aus.

Wie Figur 5 für die ersten drei Sender 4 exemplarisch zeigt, senden alle Sender 4 unterschiedliche Codierungen aus (in Figur 5 für die ersten drei Sender 4 mit a, b, c bezeichnet).

Alle Zyklen addieren sich zu einem Gesamtzyklus A.

Die Synchronisierung der Empfänger 6 auf die Sender 4 erfolgt wieder auf optischem Weg über die Synchronisationseinheit 7, analog zur Ausführungsform gemäß Figur 1. Dabei wird im vorliegenden Fall die Codierung einer Strahlachse zur Synchronisierung herangezogen. Da sich alle Codierungen eindeutig voneinander unterscheiden, kann eine beliebige Strahlachse zur Synchronisierung herangezogen werden.

Die Auswertung der Strahlachsen in der Datenauswerteeinheit 8 erfolgt derart, dass ein Schaltsignal mit dem Schaltzustand "freier Überwachungsbereich" nur dann generiert wird, wenn für alle Strahlachsen die Lichtpulse des jeweiligen Senders 4 im zugeordneten Empfänger 6 registriert werden. Ein einer Objektmeldung entsprechender Schaltzustand des Schaltsignals wird dann erhalten, wenn wenigstens die Lichtstrahlen 3 einer Strahlachse durch einen Objekteingriff unterbrochen sind.

Die Fremdlichterfassung bei dem Lichtvorhang gemäß Figur 4 erfolgt analog zum optischen Sensor 1 gemäß Figur 1 mit der Erweiterung dahingehend, dass für jede Strahlachse eine Fehlerauswertung gemäß dem Verfahren nach Figur 2 oder 3 erfolgt.

### Bezugszeichenliste

- (1): Optischer Sensor
- (2): Gehäuse
- (3): Lichtstrahlen
- (4): Sender
- (5): Gehäuse
- (6): Empfänger
- (7): Synchronisationseinheit
- (8): Datenauswerteeinheit
- (9): Fremdlichtauswerteeinheit
- (10): Fremdlichtstrahlen

## Patentansprüche

1. Optischer Sensor (1) mit wenigstens einem Sender (4), wenigstens einem Empfänger (6) und einer Datenauswerteeinheit (8), wobei in der Datenauswerteeinheit (8) anhand von am Ausgang des Empfängers (6) anstehenden Empfangssignalen geprüft wird, ob eine eine Codierung bildende Folge von vom Sender (4) emittierten Lichtpulsen im Empfänger (6) registriert wird und abhängig hiervon ein binäres Schaltsignal generiert wird, **dadurch gekennzeichnet, dass** eine Synchronisationseinheit (7) vorgesehen ist, mittels derer der wenigstens eine Sender (4) und der wenigstens eine Empfänger (6) zeitlich synchron innerhalb vorgegebener Zyklen aktiviert sind, wobei innerhalb eines Zyklus der oder ein Sender (4) eine Folge von Lichtimpulsen emittiert, dass die vom Sender (4) emittierten Lichtpulse in verschiedenen Zyklen zueinander invertiert und/oder zeitlich verschoben sind, und dass eine Fremdlichtauswerteeinheit (9) vorgesehen ist, welche zur Erfassung von Fremdlicht innerhalb eines Zyklus nur in den Zeitintervallen, in welchen vom Sender (4) keine Lichtpulse emittiert werden, die Empfangssignale des Empfängers (6) auswertet.

2. Optischer Sensor nach Anspruch 1, **dadurch gekennzeichnet, dass** dieser ein Lichtvorhang ist, welcher mehrere Strahlachsen bildende Paare von Sendern (4) und Empfängern (6) aufweist, wobei die Paare von Sendern (4) und Empfängern (6) mittels der Synchronisationseinheit (7) zyklisch einzeln nacheinander aktiviert sind.

3. Optischer Sensor nach Anspruch 2, **dadurch gekennzeichnet, dass** die Sender (4) und Empfänger (6) in unterschiedlichen Gehäusen (2, 5) an gegenüberliegenden Rändern eines Überwachungsbereichs angeordnet sind, oder dass die Sender (4) und Empfänger (6) in einem Gehäuse (2, 5) integriert sind, wobei in Abstand zu diesem eine Reflektoreinheit vorgesehen ist.

4. Optischer Sensor nach einem der Ansprüche 2 oder 3, **dadurch gekennzeichnet, dass** mit der Synchronisationseinheit (7) der Betrieb der Sender (4) und Empfänger (6) derart synchronisiert ist, dass jeweils in einem Zyklus nur ein Sender (4) und ein Empfänger (6) einer Strahlachse aktiviert sind.

5. Optischer Sensor nach einem der Ansprüche 1 bis 4, **dadurch gekennzeichnet, dass** mit der Synchronisationseinheit (7) eine drahtgebundene Synchronisierung durchführbar ist, wobei die Synchronisationseinheit (7) über Leitungen an Steuermittel für den oder die Sender (4) und den oder die Empfänger (6) angeschlossen ist.

6. Optischer Sensor nach einem der Ansprüche 1 bis 4, **dadurch gekennzeichnet, dass** mit der Synchronisationseinheit (7) eine optische Synchronisierung erfolgt, wobei für die optische Synchronisierung die von den Lichtpulsen des oder eines Senders (4) gebildete Codierung dient.

7. Optischer Sensor nach Anspruch 6, **dadurch gekennzeichnet, dass** bei dessen Ausbildung als Lichtvorhang die Lichtpulse der einzelnen Strahlachsen unterschiedliche Codierungen ausbilden, so dass eine beliebige Strahlachse zur Synchronisierung verwendbar ist.

8. Optischer Sensor nach einem der Ansprüche 1 bis 7, **dadurch gekennzeichnet, dass** in aufeinanderfolgenden Zyklen, in denen der oder ein Sender (4) aktiviert ist, die Lichtpulse des Senders (4) zueinander invertiert und/oder zeitlich verschoben sind.

9. Optischer Sensor nach einem der Ansprüche 1 bis 7, **dadurch gekennzeichnet, dass** nach einer fest vorgegebenen, zeitlich variierenden oder zufälligen Anzahl von Zyklen, in denen der oder ein Sender (4) aktiviert ist ein Zyklus folgt, in welchem die Lichtpulse dieses Senders (4) invertiert und/oder zeitlich verschoben sind.

10. Optischer Sensor nach einem der Ansprüche 1 bis 9, **dadurch gekennzeichnet, dass** der Betrag einer zeitlichen Verschiebung von Lichtpulsen innerhalb eines Zyklus konstant oder zeitlich variierbar ist.

11. Optischer Sensor nach einem der Ansprüche 1 bis 10, **dadurch gekennzeichnet, dass** in der Datenauswerteeinheit (8) eine Auswertung von Empfangssignalen über mehrere Zyklen erfolgt, um das Schaltsignal zu generieren.

12. Optischer Sensor nach einem der Ansprüche 1 bis 11, **dadurch gekennzeichnet, dass** in der Datenauswerteeinheit (8) die Empfangssignale des oder der Empfänger (6) mit einem ersten Schwellwert bewertet werden, und dass in der Fremdlichtauswerteeinheit (9) die Empfangssignale des oder der Empfänger (6) mit einem zweiten Schwellwert bewertet werden.

13. Optischer Sensor nach einem der Ansprüche 1 bis 11, **dadurch gekennzeichnet, dass** in der Fremdlichtauswerteeinheit (9) aktuelle Empfangssignale mit einem zuvor bestimmten Mittelwert von Empfangssignalen verglichen werden.

14. Optischer Sensor nach einem der Ansprüche 1 bis 13, **dadurch gekennzeichnet, dass** die Fremdlichtauswerteeinheit (9) eine Zählvorrichtung aufweist, mittels derer Ergebnisse von Fremdlichteinstrahlungen gezählt werden.

15. Optischer Sensor nach einem der Ansprüche 1 bis 14, **dadurch gekennzeichnet, dass** in der Fremdlichtauswerteeinheit (9) in Abhängigkeit von registrierten Fremdlichteinstrahlungen auf den oder die Empfänger (6) eine Fehlermeldung generiert wird.

16. Verfahren zum Betrieb eines optischen Sensors (1) mit wenigstens einem Sender (4), wenigstens einem Empfänger (6) und einer Datenauswerteeinheit (8), wobei in der Datenauswerteeinheit (8) anhand von am Ausgang des Empfängers (6) anstehenden Empfangssignalen geprüft wird, ob eine eine Codierung bildende Folge von vom Sender (4) emittierten Lichtpulsen im Empfänger (6) registriert wird und abhängig hiervon ein binäres Schaltsignal generiert wird, **dadurch gekennzeichnet, dass** eine Synchronisationseinheit (7) vorgesehen ist, mittels derer der wenigstens eine Sender (4) und der wenigstens eine Empfänger (6) zeitlich synchron innerhalb vorgegebener Zyklen aktiviert werden, wobei innerhalb eines Zyklus der oder ein Sender (4) eine Folge von Lichtimpulsen emittiert, dass die vom Sender (4) emittierten Lichtpulse in verschiedenen Zyklen zueinander invertiert und/oder zeitlich verschoben sind, und dass eine Fremdlichtauswerteeinheit (9) vorgesehen ist, welche zur Erfassung von Fremdlicht innerhalb eines Zyklus nur in den Zeitintervallen, in welchen vom Sender (4) keine Lichtpulse emittiert werden, die Empfangssignale des Empfängers (6) auswertet.

## Claims

1. An optical sensor (1) having at least one transmitter (4), at least one receiver (6) and a data evaluation unit (8), it being checked in the data evaluation unit (8), on the basis of received signals present at the output of the receiver (6), whether a sequence, forming a coding, of light pulses emitted by the transmitter (4) is registered in the receiver (6) and a binary switching signal is generated as a function thereof, **characterised in that** a synchronisation unit (7) is provided, by means of which said at least one transmitter (4) and said at least one receiver (6) are activated synchronously in time within predetermined cycles, wherein within a cycle said or a transmitter (4) emits a sequence of light pulses, **in that** the light pulses emitted by the transmitter (4) are inverted relative to one another and/or shifted in time in different cycles, and **in that** an extraneous light evaluation unit (9) is provided which, in order to detect extraneous light within a cycle, evaluates the received signals of the receiver (6) only in the time intervals in which no light pulses are emitted by the transmitter (4).

2. An optical sensor according to claim 1, **characterised in that** this is a light curtain which has several pairs of transmitters (4) and receivers (6) forming beam axes, the pairs of transmitters (4) and receivers (6) being activated cyclically individually one after the other by means of the synchronisation unit (7).

3. An optical sensor according to claim 2, **characterised in that** the transmitters (4) and receivers (6) are arranged in different housings (2, 5) at opposite edges of a monitoring area, or **in that** the transmitters (4) and receivers (6) are integrated in one housing (2, 5), a reflector unit being provided at a distance from the latter.

4. An optical sensor according to one of claims 2 or 3, **characterised in that** the operation of the transmitters (4) and receivers (6) is synchronised with the synchronisation unit (7) in such a way that only one transmitter (4) and one receiver (6) of a beam axis are activated in each cycle.

5. An optical sensor according to one of the claims 1 to 4, **characterised in that** a wirebound synchronisation can be carried out with the synchronisation unit (7), the synchronisation unit (7) being connected via lines to control means for the transmitter or transmitters (4) and the receiver or receivers (6).

6. An optical sensor according to one of the claims 1 to 4, **characterised in that** optical synchronisation takes place with the synchronisation unit (7), the coding formed by the light pulses of the transmitter or a transmitter (4) serving for the optical synchronisation.

7. An optical sensor according to claim 6, **characterised in that**, in its design as a light curtain, the light pulses of the individual beam axes form different encodings, so that any beam axis can be used for synchronisation.

8. An optical sensor according to one of claims 1 to 7, **characterised in that** in successive cycles in which said or a transmitter (4) is activated, the light pulses of the transmitter (4) are inverted relative to one another and/or shifted in time.

9. An optical sensor according to one of the claims 1 to 7, **characterised in that** after a fixed, time-varying or random number of cycles in which said or a transmitter (4) is activated, a cycle follows in which the light pulses of this transmitter (4) are inverted and/or shifted in time.

10. An optical sensor according to one of claims 1 to 9, **characterised in that** the amount of a temporal shift of light pulses within a cycle is constant or can be varied in time.

11. An optical sensor according to one of the claims 1 to 10, **characterised in that** in the data evaluation unit (8) an evaluation of received signals takes place over several cycles in order to generate the switching signal.

12. An optical sensor according to one of the claims 1 to 11, **characterised in that** the received signals of the receiver or receivers (6) are evaluated with a first threshold value in the data evaluation unit (8), and **in that** the received signals of the receiver or receivers (6) are evaluated with a second threshold value in the external light evaluation unit (9).

13. An optical sensor according to one of claims 1 to 11, **characterised in that** current received signals are compared with a previously determined mean value of received signals in the ambient light evaluation unit (9).

14. An optical sensor according to one of the claims 1 to 13, **characterised in that** the extraneous light evaluation unit (9) has a counting device by means of which the results of extraneous light irradiations are counted.

15. An optical sensor according to one of the claims 1 to 14, **characterised in that** an error message is generated in the external light evaluation unit (9) as a function of registered external light irradiations on the receiver or receivers (6).

16. A method for operating an optical sensor (1) having at least one transmitter (4), at least one receiver (6) and a data evaluation unit (8), wherein a check is made in the data evaluation unit (8), on the basis of received signals present at the output of the receiver (6), as to whether a sequence, forming an encoding, of light pulses emitted by the transmitter (4) is registered in the receiver (6) and a binary switching signal is generated as a function thereof, **characterised in that** a synchronisation unit (7) is provided, by means of which said at least one transmitter (4) and said at least one receiver (6) are activated synchronously in time within predetermined cycles, wherein within a cycle said or a transmitter (4) emits a sequence of light pulses, **in that** the light pulses emitted by the transmitter (4) are inverted relative to one another in different cycles and/or shifted in time, and **in that** an extraneous light evaluation unit (9) is provided which, in order to detect extraneous light within a cycle, evaluates the received signals of the receiver (6) only in the time intervals in which no light pulses are emitted by the transmitter (4).

## Revendications

1. Capteur optique (1) comportant au moins un émetteur (4), au moins un récepteur (6) et une unité d'évaluation des données (8), l'unité d'évaluation des données (8) vérifiant, sur la base des signaux reçus présents à la sortie du récepteur (6), si une séquence, formant un codage, d'impulsions lumineuses émises par l'émetteur (4) est enregistrée dans le récepteur (6) et si un signal de commutation binaire est généré en fonction de celle-ci, **caractérisé en ce qu'**une unité de synchronisation (7) est prévue, par laquelle au moins un émetteur (4) et au moins un récepteur (6) sont activés de manière synchronisée dans le temps à l'intérieur de cycles prédéterminés, dans lesquels ledit ou un émetteur (4) émet une séquence d'impulsions lumineuses à l'intérieur d'un cycle, les impulsions lumineuses émises par l'émetteur (4) étant inversées l'une par rapport à l'autre et/ou décalées dans le temps à l'intérieur de différents cycles, et qu'une unité d'évaluation de la lumière parasite (9) est prévue qui, pour détecter la lumière parasite dans un cycle, évalue les signaux reçus du récepteur (6) uniquement dans les intervalles de temps pendant lesquels aucune impulsion lumineuse n'est émise par l'émetteur (4).

2. Capteur optique selon la revendication 1, **caractérisé par le fait qu'**il s'agit d'un rideau lumineux comportant plusieurs paires d'émetteurs (4) et de récepteurs (6) formant des axes de rayonnement, les paires d'émetteurs (4) et de récepteurs (6) étant activées cycliquement individuellement l'une après l'autre au moyen de l'unité de synchronisation (7).

3. Capteur optique selon la revendication 2, **caractérisé par le fait que** les émetteurs (4) et les récepteurs (6) sont disposés dans différents boîtiers (2, 5) aux bords opposés d'une zone de surveillance, ou **par le fait que** les émetteurs (4) et les récepteurs (6) sont intégrés dans un seul boîtier (2, 5), une unité de réflecteur étant prévue à une certaine distance de ce dernier.

4. Capteur optique selon l'une des revendications 2 ou 3, **caractérisé en ce que** le fonctionnement des émetteurs (4) et des récepteurs (6) est synchronisé avec l'unité de synchronisation (7) de telle sorte que seuls un émetteur (4) et un récepteur (6) d'un axe de faisceau sont activés à chaque cycle.

5. Capteur optique selon l'une des revendications 1 à 4, **caractérisé en ce qu'**une synchronisation filaire peut être réalisée avec l'unité de synchronisation (7), l'unité de synchronisation (7) étant reliée par des lignes aux moyens de commande de l'émetteur ou des émetteurs (4) et du récepteur ou des récepteurs (6).

6. Capteur optique selon l'une des revendications 1 à 4, **caractérisé en ce que** la synchronisation optique a lieu avec l'unité de synchronisation (7), le codage formé par les impulsions lumineuses de l'émetteur ou d'un émetteur (4) servant à la synchronisation optique.

7. Capteur optique selon la revendication 6, **caractérisé par le fait que**, dans sa conception en tant que rideau lumineux, les impulsions lumineuses des différents axes de faisceau forment des codages différents, de sorte que n'importe quel axe de faisceau peut être utilisé pour la synchronisation.

8. Capteur optique selon l'une des revendications 1 à 7, **caractérisé par le fait que**, dans les cycles successifs au cours desquels ledit ou un émetteur (4) est activé, les impulsions lumineuses de l'émetteur (4) sont inversées l'une par rapport à l'autre et/ou décalées dans le temps.

9. Capteur optique selon l'une des revendications 1 à 7, **caractérisé par le fait qu'**après un nombre fixe, variable dans le temps ou aléatoire de cycles au cours desquels ledit ou un émetteur (4) est activé, il s'ensuit un cycle au cours duquel les impulsions lumineuses de cet émetteur (4) sont inversées et/ou décalées dans le temps.

10. Capteur optique selon l'une des revendications 1 à 9, **caractérisé par le fait que** l'importance du décalage temporel des impulsions lumineuses au cours d'un cycle est constante ou peut être modifiée dans le temps.

11. Capteur optique selon l'une des revendications 1 à 10, **caractérisé par le fait que** l'unité d'évaluation des données (8) évalue les signaux reçus sur plusieurs cycles afin de générer le signal de commutation.

12. Capteur optique selon l'une des revendications 1 à 11, **caractérisé par le fait que** les signaux reçus du ou des récepteurs (6) sont évalués avec une première valeur seuil dans l'unité d'évaluation des données (8), et **par le fait que** les signaux reçus dudit ou des récepteurs (6) sont évalués avec une deuxième valeur seuil dans l'unité d'évaluation de la lumière externe (9).

13. Capteur optique selon l'une des revendications 1 à 11, **caractérisé par le fait que** les signaux reçus actuels sont comparés à une valeur moyenne préalablement déterminée des signaux reçus dans l'unité d'évaluation de la lumière ambiante (9).

14. Capteur optique selon l'une des revendications 1 à 13, **caractérisé par le fait que** l'unité d'évaluation de la lumière extérieure (9) est dotée d'un dispositif de comptage permettant de compter les résultats des irradiations de lumière extérieure.

15. Capteur optique selon l'une des revendications 1 à 14, **caractérisé par le fait qu'**un message d'erreur est généré dans l'unité d'évaluation de la lumière extérieure (9) en fonction des rayonnements de lumière extérieure enregistrés sur le ou les récepteurs (6).

16. Procédé de fonctionnement d'un capteur optique (1) comportant au moins un émetteur (4), au moins un récepteur (6) et une unité d'évaluation des données (8), dans lequel on vérifie dans l'unité d'évaluation des données (8), sur la base des signaux reçus présents à la sortie du récepteur (6), si une séquence, formant un codage, d'impulsions lumineuses émises par l'émetteur (4) est enregistrée dans le récepteur (6) et si un signal de commutation binaire est généré en fonction de celle-ci, **caractérisé en ce qu'**une unité de synchronisation (7) est prévue, par laquelle au moins un émetteur (4) et au moins un récepteur (6) sont activés de manière synchronisée dans le temps à l'intérieur de cycles prédéterminés, dans lesquels ledit ou un émetteur (4) émet une séquence d'impulsions lumineuses à l'intérieur d'un cycle, les impulsions lumineuses émises par l'émetteur (4) étant inversées l'une par rapport à l'autre dans des cycles différents et/ou décalées dans le temps, et qu'une unité d'évaluation de la lumière parasite (9) est prévue qui, afin de détecter la lumière parasite au cours d'un cycle, évalue les signaux reçus du récepteur (6) uniquement dans les intervalles de temps au cours desquels aucune impulsion lumineuse n'est émise par l'émetteur (4).
